# EUROPEAN PATENT SPECIFICATION

(11) **EP 2 139 209 B1**
(45) Date of publication and mention of the grant of the patent: **24.04.2013**
(21) Application number: 09003337.4
(22) Date of filing: 06.03.2009
(51) Int. Cl.: H04M 1/56, H04M 1/57, H04M 1/2745, H04M 1/725

(54) **Communication equipment**
Kommunikationsausrüstung
Equipement de communication

(30) Priority: 26.06.2008 JP 2008167786
(43) Date of publication of application: 30.12.2009
(73) Proprietor: Fujitsu Mobile Communications Limited, Kawasaki-shi, Kanagawa 211-8588 (JP)
(72) Inventor: Sasaki, Masae, Tokyo 105-8001 (JP)
(74) Representative: HOFFMANN EITLE

(56) References cited:
- US-A1- 2006 246 874

## Description

### BACKGROUND OF THE INVENTION

### 1. Field of the Invention

The present invention relates to communication equipment which stores an outgoing/incoming call history of phone and a mail transmission/reception history at all times so that it can display the periods of time passed from the times at which an outgoing call was transmitted and an incoming call was received and a mail was transmitted and received previously particularly when an outgoing call is transmitted and an incoming call is received, and a mail is transmitted and received.

### 2. Description of the Related Art

Conventionally, an apparatus making use of information described by a bar code was developed to obtain opponent's information when an outgoing call is transmitted and an incoming call is received. The apparatus is, for example, a phone arranged such that a bar code corresponding to a phone number printed on a printed matter is read by a bar code recognition unit disposed to a receiver, the read bar code is converted into a transmission signal of the phone, and the conversed phone number is displayed. However, when the phone number converted from the read bar code is displayed, a problem arises in that relating information such as user's information and the like of the phone number cannot be displayed.

To handle the above problem, there is proposed an information read/display apparatus which can read coded information or an image of character information and recognize information relating to the above information (refer to Japanese Unexamined Patent Application Publication No. 2006-101215). The information read/display apparatus is arranged such that when the phone number of a caller, to which a communication is made at a time an incoming call is received by a stationary phone, is not stored, the phone number is converted into a bar code, the bar code and the phone number are displayed, a mobile phone with a camera pickups the displayed bar code and converts it into the phone number, searches phone directory data, and when a phone number which agrees with the phone number exists, a caller's name and the like that are the contents of the phone directory data are displayed.

In the mobile phone, it is considered that when an outgoing call is transmitted to and an incoming call is received from and a mail is transmitted and received to and from a contact address registered to an address book, it is desired for a user to grasp how long periods of time have passed after an outgoing call was transmitted to and an incoming call was received from and a mail was transmitted and received to and from the contact address previously so that the user can smoothly proceed a conversation and a mail. However, it is troublesome for the user to grasp how long periods of time have passed because an outgoing/incoming call history of phone and a mail transmission/reception history must be referred to.

An object of the present invention, which was made in view of the above problem, is to provide communication equipment capable of permitting a user to simply grasp how long periods of time have passed after an outgoing call was transmitted and an incoming call was received and a mail was transmitted and received previously when an outgoing call is transmitted to and an incoming call is received from and a mail is transmitted and received to and from the contact address. It is furthermore an object of the present invention to minimize memory usage of the communication equipment.

US 2006/0246874 A1 describes a cell phone directory management system for organizing telephone numbers such that only the most popular ones are maintained in the main directory. Date and time of call events are stored and the amount of time that has elapsed between call events for a particular contact is indicated. If the time period between call events is longer than a certain value, the corresponding telephone number is removed from the main directory.

### SUMMARY OF THE INVENTION

Above stated objects are solved by the subject matter of the independent claims. Advantageous embodiments are described by the dependent claims.

According to the communication equipment of the present invention, a user can simply grasp how long period of time has passed from the time at which the user made a communication with a contact address registered to an address book in such a manner that when the user transmits an outgoing call to and receives an incoming mail from or transmits a mail to and receives a mail from the contact address, the dates and times of the outgoing and incoming calls and the dates and times of the transmitted and received mails are recorded at all times, and when the user transmits an outgoing call to and receives an incoming mail from or transmits a mail to and receives a mail from the contact address next, the periods of time, which have passed from the times at which a previous outgoing call was transmitted and a previous incoming call was received or a previous mail was transmitted and a previous mail was received, are displayed.

### BRIEF DESCRIPTION OF THE DRAWINGS

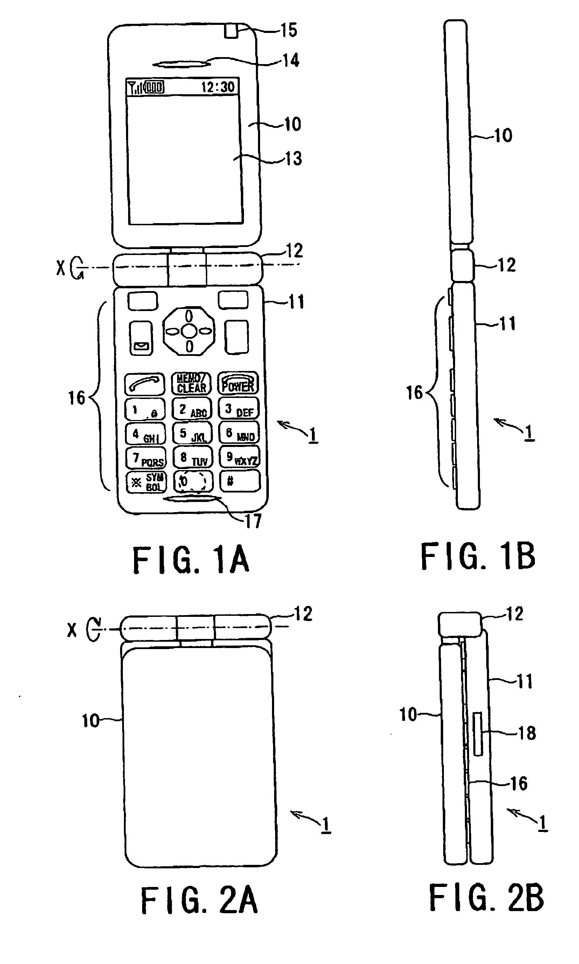

Fig. 1(A) is a front elevational view showing an open which a previous outgoing call was transmitted and a previous incoming call was received or a previous mail was transmitted and a previous mail was received based on the history of the outgoing and incoming calls or the history of the transmitted mail and the received mail and notify the passed periods of time.

According to the communication equipment of the present invention, a user can imply grasp how long period of time has passed from the time at which the user made a communication with a contact address registered to an address book in such a manner that when the user transmits an outgoing call to and receives an incoming mail from or transmits a mail to and receives a mail from the contact address, the dates and times of the outgoing and incoming calls and the dates and times of the transmitted and received mails are recorded at all times, and when the user transmits an outgoing call to and receives an incoming mail from or transmits a mail to and receives a mail from the contact address next, the periods of time, which have passed from the times at which a previous outgoing call was transmitted and a previous incoming call was received or a previous mail was transmitted and a previous mail was received, are displayed.

### BRIEF DESCRIPTION OF THE DRAWINGS

Fig. 1(A) is a front elevational view showing an open state of communication equipment (mobile phone) according to the present invention, and a Fig. 1(B) is a side elevational view showing the open state of the communication equipment (mobile phone) according to the present invention.
Fig. 2(A) is a front elevational view showing a closed state of the communication equipment (mobile phone) according to the present invention, and Fig. 2(B) is a side elevational view showing the closed state of the communication equipment (mobile phone) according to the present invention;
Fig. 3 is a function block diagram of the communication equipment (mobile phone) according to the present invention;
Fig. 4 is a data arrangement view showing transmission/reception history information;
Fig. 5 is a flowchart showing a procedure of an incoming call (mail reception) of a transmission/reception history management process in the communication equipment (mobile phone) according to the present invention;
Fig. 6(A) to Fig. 6(C) are screen views showing examples of display screens when the communication equipment (mobile phone) according to the present invention executes the transmission/reception history management process;
Fig. 7 is a screen view showing an example of the display screen when the communication equipment (mobile phone) according to the present invention executes the transmission/reception history management process;
Fig. 8 is a flowchart showing a procedure of an outgoing call (mail transmission) of the transmission/reception history management process in the communication equipment (mobile phone) according to the present invention;
Fig. 9(A) to Fig. 9(C) are screen views showing examples of display screens when the communication equipment (mobile phone) according to the present invention executes the transmission/reception history management process;
Fig. 10 is a screen view showing an example of a display screen when the communication equipment (mobile phone) according to the present invention executes the transmission/reception history management process;
Fig. 11 is a flowchart showing a procedure when a mail is created in the transmission/reception history management process in the communication equipment (mobile phone) according to the present invention;
Fig. 12(A) to Fig. 12(C) are screen views showing examples of display screens when the communication equipment (mobile phone) according to the present invention executes the transmission/reception history management process;
Fig. 13 is a flowchart showing a procedure when a schedule is input in the transmission/reception history management process in the communication equipment (mobile phone) according to the present invention; and
Fig. 14(A) and Fig. 14(B) are screen views showing examples of display screens when the communication equipment (mobile phone) according to the present invention executes the transmission/reception history management process.

### DETAILED DESCRIPTION OF THE PREFERRED EMBODIMENTS

An embodiment of communication equipment according to the present invention will be explained referring to the accompanying drawings. A clam-shell type mobile phone 1, which is composed of a plurality of bodies openably and closably coupled with each other, will be explained as an example of the communication equipment according to the present invention. A part A of Fig. 1 is a front elevational view showing an open state of the mobile phone 1, and a part B of Fig. 1 is a side elevational view showing the open state of the mobile phone 1. A part A of Fig. 2 is a back surface view showing a closed state of the mobile phone 1, and a part B of Fig. 2 is a side elevational view showing the closed state of the mobile phone 1.

As shown in the parts A and B of Fig. 1 and the parts A and B of Fig. 2, the mobile phone 1 is mainly composed of a rectangular plate-shaped upper body 10 and a lower body 11 having approximately the same shape as that of the upper body 10. The upper body 10 is stacked on the lower body 11 so that they cover one surface in the closed state. The upper body 10 is coupled with the lower body 11 by a hinge unit 12 so that the hinge unit 12 is clamped therebetween. The upper body 10 is formed such that it can be pivoted a predetermined angle about the hinge unit 12 in an X direction in the parts A and B of Fig. 1 and the parts A and B of Fig. 2 with respect to the lower body 11. The attitude of the mobile phone 1 is changed from the closed state to the open state or from the open state to the closed state by pivoting the upper body 10 with respect to the lower body 11.

The upper body 10 has a display 13, a speaker 14, and a LED 15 disposed on an inner surface thereof (surface confronting with the lower body 11). The display 13 displays display information including characters, an image, and the like, the speaker 14 outputs a voice received from a call opponent, and the LED 15 notifies a state of a terminal of the mobile phone 1 such as an incoming call is received and a mail is received. Although the display 13, the speaker 14, and the LED 15 are covered with the lower body 11 and are not exposed to the outside when the mobile phone 1 is closed, they are exposed to the outside when the upper body 10 is pivoted with respect to the lower body 11 and changed to the open state.

The lower body 11 has operation keys 16 disposed on an inner surface thereof (surface confronting with the upper body 10). The operation keys 16 includes, for example, a power supply key for switching ON/OFF of a power supply, a call key for executing a call process, ten keys for inputting numbers and characters, a mail key for starting up a mail function, shortcut keys such as a Web key for starting up a Web function, and the like. Further, the lower body 11 has a microphone 17 disposed thereto to collect a voice. Although the operation keys 16 and the microphone 17 are covered with the upper body 10 and are not exposed to the outside when the mobile phone 1 is closed, they are exposed to the outside when the upper body 10 is pivoted with respect to the lower body 11 and changed to the open state.

A connector 18 is disposed to a side surface of the lower body 11 to connect an AC adaptor to the mobile phone 1. When the AC adaptor is connected to the connector 18, power is supplied to a power supply source (battery and the like) built in the mobile phone 1 from the AC adaptor. Since the connector 18 is exposed to the outside of the mobile phone 1 regardless that the mobile phone 1 is closed or opened, a user can charge the mobile phone 1 by connecting the AC adaptor to the connector 18 when necessary.

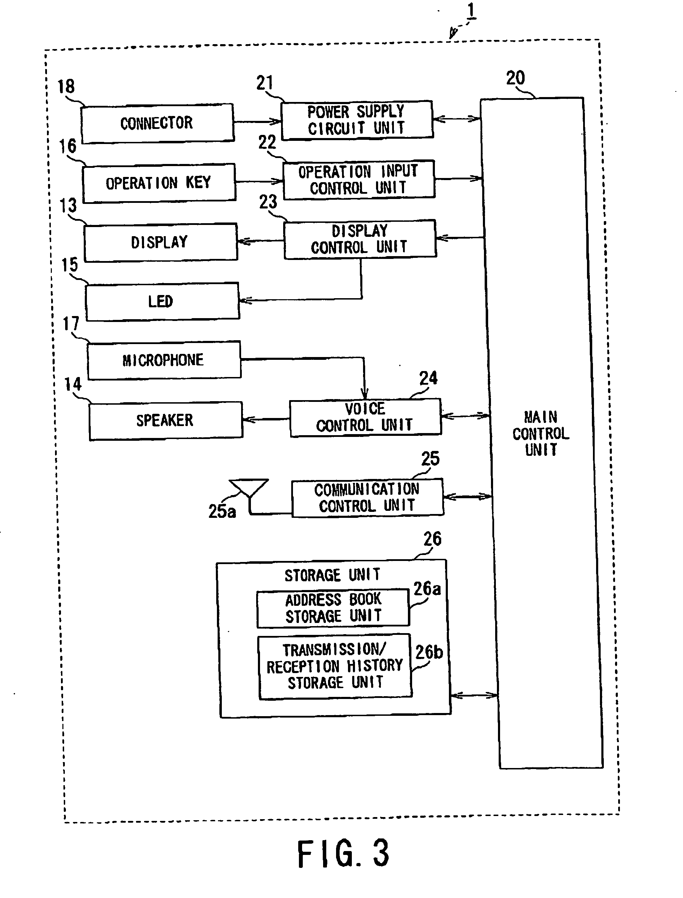

Next, a function of the mobile phone 1 will be explained using a functional block diagram shown in Fig. 3. As shown in Fig. 3, in the mobile phone 1, a main control unit 20, a power supply circuit unit 21, an operation input control unit 22, a display control unit 23, a voice control unit 24, a communication control unit 25, and a storage unit 26 are connected to each other through a bus so that a communication can be carried out therethrough.

The main control unit 20 has a CPU (Central Processing Unit) and integrally controls the mobile phone 1 as well as executes a transmission/reception history management process to be described later and other various calculating operation process, control process, and the like. The power supply circuit unit 21 has an input interface to, for example, the power supply key, and when it is detected that the power supply key is depressed by the user, the power supply circuit unit 21 creates a signal showing it and transfers it to the main control unit 20. Further, the power supply circuit unit 21 has the power supply source (battery and the like) and switches the ON/OFF state of the power supply source based on an input through the power supply key, and when the power supply source in an ON state, the power supply circuit unit 21 supplies power from the power supply source to the respective units so that the mobile phone 1 can be operated.

The operation input control unit 22 has an input interface to the operation keys 16, and when it is detected that any of the operation keys 16 is depressed, the operation input control unit 22 creates a signal showing the depressed operation keys 16 and transfers it to the main control unit 20. The display control unit 23 has a display interface to the display 13 and the LED 15 and displays document data, image data, and the like on the display 13 and puts on and off the LED 15 under the control of the main control unit 20.

The voice control unit 24 creates an analog voice signal from the voice collected by the microphone 17 and converts the analog voice signal into a digital voice signal under the control of the main control unit 20. Further, when the voice control unit 24 obtains a digital voice signal, it converts the digital voice signal in to an analog voice signal and outputs it from the speaker 14 as a voice under the control of the main control unit 20.

The communication control unit 25 restores data by subjecting a signal received from a base station through an antenna 25a to spread spectrum inverse processing under the control of the main control unit 20. The data is transmitted to the voice control unit 24 and output from the speaker 14, transmitted to the display control unit 23 and displayed on the display 13, or recorded to the storage unit 26 in response to an instruction of the main control unit 20. Further, when the communication control unit 25 obtains voice data collected by the microphone 17, data input through the operation keys 16, and data stored to the storage unit 26 under the control of the main control unit 20, it subjects these data to spread spectrum processing and transmits these data to the base station through the antenna 25a.

The storage unit 26 is composed of a ROM (Read Only Memory), a hard disc, a non-volatile memory, and a database for storing a processing program and data necessary to a process, and the like as to a process executed by the main control unit 20, and a RAM (Random Access Memory) and the like for temporarily storing data used when the main control unit 20 executes the process. It is assumed that a processing program, which used when the main control unit 20 executes the transmission/reception history management process to be described later, is stored to, for example, a ROM.

Further, the storage unit 26 has address book storage unit 26a for storing an address book information and a transmission/reception history storage unit 26b for storing transmission/reception history information. The address book information is information in which phone numbers and mail addresses are caused to correspond to contact address IDs (including names and the like of contact addresses) for identifying contact addresses (communication opponents), respectively.

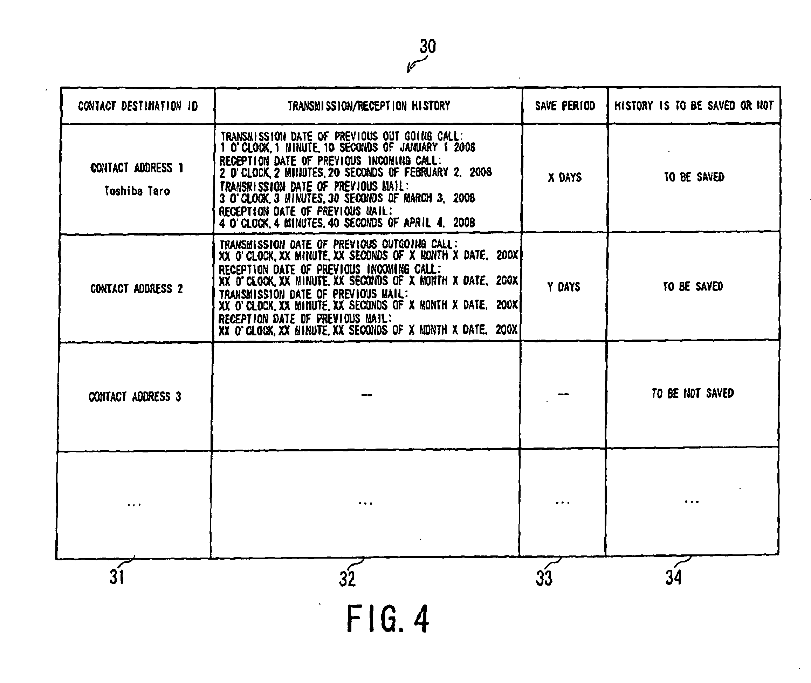

The transmission/reception history information is information as to an outgoing/incoming call of phone and transmission/reception of mail in the mobile phone 1. As shown in Fig. 4 as transmission/reception information 30, transmission/reception information 32, which shows the dates and times when an outgoing call was transmitted and an incoming call was received and a mail was transmitted and received previously, save period information 33, which shows the save period of the transmission/reception information 32, and save necessary/unnecessary information 34, which shows whether or not the transmission/reception history is saved are caused to correspond to the contact address ID information 31 corresponding to an address book.

The transmission/reception information 32 is shown by the respective dates and times of a previous outgoing call, a previous incoming call, previous transmission of mail, and previous reception of mail. Further, the save necessary/unnecessary information 34 is shown by, for example, "to be saved" as to a contact address whose transmission/reception history is remained and by, for example "to be not saved" as to a contact address whose transmission/reception history is not remained. Then, when the save necessary/unnecessary information 34 is shown by "to be not saved", the transmission/reception information 32 and the save period information 33 are shown by empty data. When the user sets the save necessary/unnecessary information 34 to each contact address, since only the transmission/reception history of a contact address desired by the user is stored, a memory of the mobile phone 1 memory can be saved.

According to, for example, the transmission/reception history information 30 shown in Fig. 4, the transmission/reception information 32 of "a previous outgoing call date: 1 o'clock, 1 minute, 10 seconds of January 1, 2008, a previous incoming call date: 2 o'clock, 2 minutes, 20 seconds of February 2, 2008, a previous mail transmission date: 3 o'clock, 3 minutes, 30 seconds of March 3, 2008, a previous mail reception date: 4 o'clock, 4 minutes, 40 seconds of April 4, 2008", the save period information 33 of X days, and the save necessary/unnecessary information 34 of "to be not saved" are caused to correspond to the contact address ID information of "contact address 1 Toshiba Taro". This means that the transmission/reception history of "Toshiba Taro" as the contact address 1 is saved for X days, the date and time at which a previous outgoing call was transmitted to the phone number of "Toshiba Taro" as the contact address 1 is 1 o'clock, 1 minute, 10 seconds of January 1, 2008, the date and time at which a previous incoming call was received from the phone number of "Toshiba Taro" as the contact address 1 is 2 o'clock, 2 minutes, 20 second of February 2, 2008, the date and time at which a previous mail was transmitted to the mail address of "Toshiba Taro" as the contact address 1 was 3 o'clock, 3 minutes, 30 seconds of March 3, 2008, and the date and time at which a previous mail was received from the mail address of "Toshiba Taro" as the contact address 1 is 4 o'clock, 4 minutes, 40 seconds of April 4, 2008.

Further, according to the transmission/reception history information 30 shown in Fig. 4, the save necessary/unnecessary information 34 of "to be not saved" is caused to correspond to the contact address ID of "a contact address 3", and data is not shown to the transmission/reception information 32 and the save period information 33 (the data is shown by empty data). This means that the history of outgoing call and incoming call and the history of transmitted mail and received mail to and from the contact address 3 are not saved, and thus the histories as to the outgoing call and incoming call and the transmitted mail and received mail to and from the mobile phone 1 to and from the contact address 3 are not stored.

Note that although an example, in which the address book storage unit 26a for storing the address book information and the transmission/reception history storage unit 26b for storing the transmission/reception history information are separately provided in a storage unit, will be explained here, the address book information and the transmission/reception history information may be stored to the same storage unit after they are caused to correspond to each other.

When the mobile phone 1 receives an incoming call and a mail from a predetermined contact address and transmits an outgoing call and transmits a mail to the predetermined contact address and inputs a schedule based on the transmission/reception history information 30, the mobile phone 1 executes the transmission/reception history management process for notifying the user that how long periods of time have passed after an outgoing call was transmitted and an incoming call was received and a mail was transmitted and received previously to and from the contact address (periods of time passed after the previous outgoing and incoming calls and the transmission and reception of the previous mail).

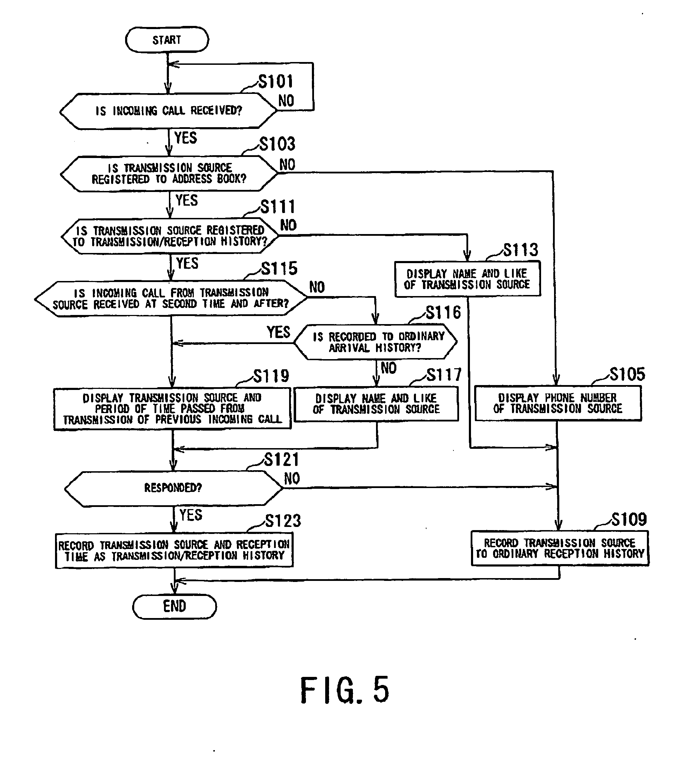

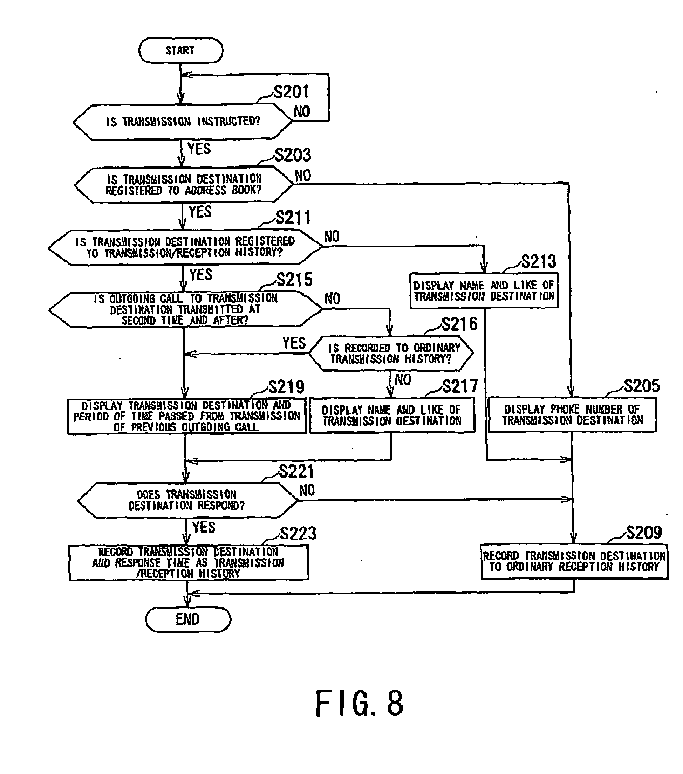

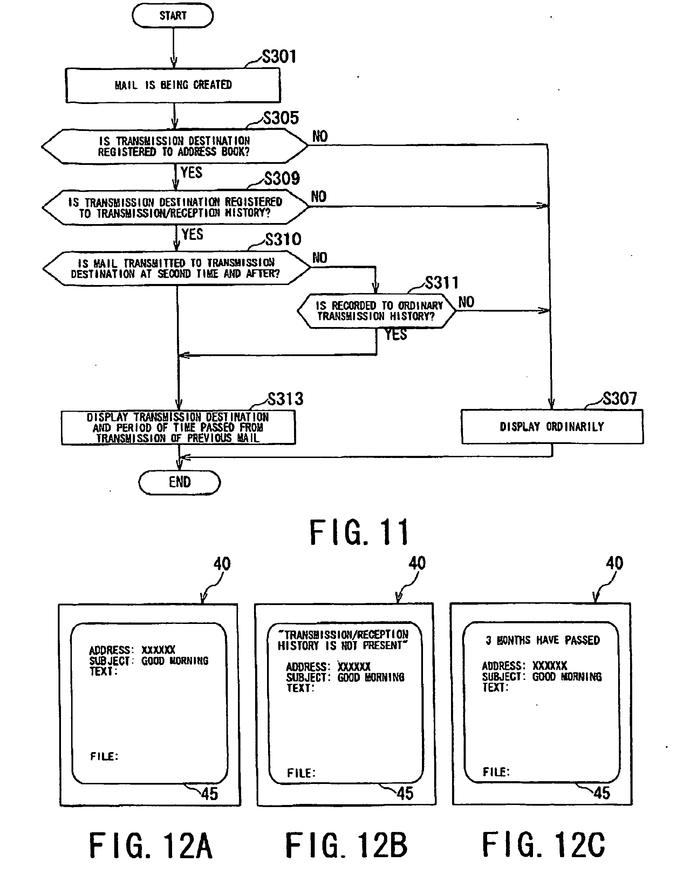

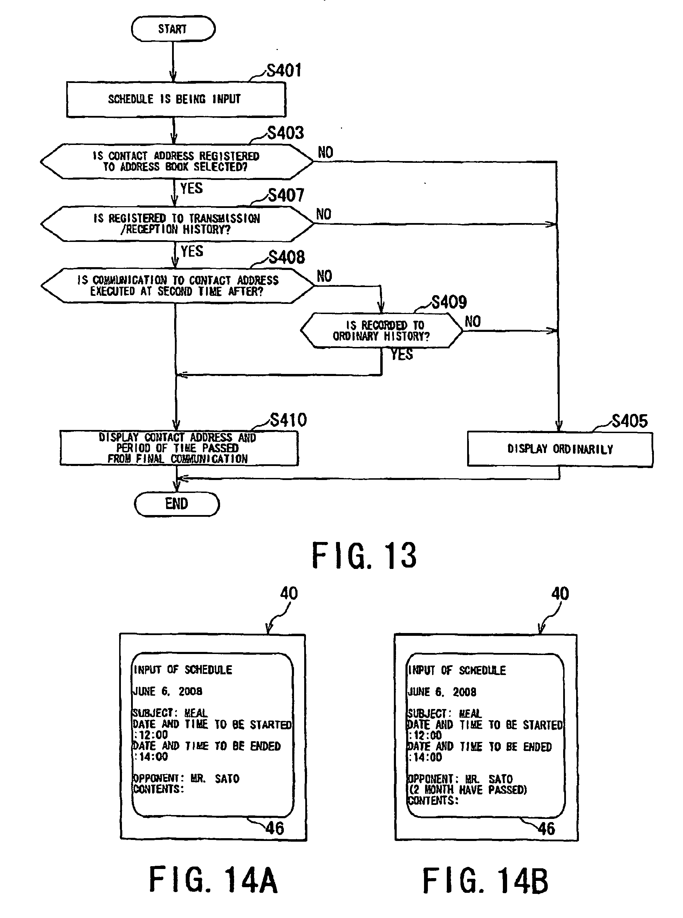

Procedures, which are executed when the mobile phone 1 executes the transmission/reception history management process, will be explained based on flowcharts shown in Figs. 5, 8, 11, 13. Note that the flowchart shown in Fig. 5 is a flowchart when the mobile phone 1 receives an incoming call and a mail, and the flowchart shown in Fig. 8 is a flowchart when the mobile phone 1 transmits an outgoing call and a mail. Further, the flowchart shown in Fig. 11 is a flowchart when the mobile phone 1 creates a mail, and the flowchart shown in Fig. 13 is a flowchart when a schedule is input to the mobile phone 1. In the following description, "step S101", for example, will be explained as "S101" omitting the term of "step".

First, a procedure of the transmission/reception history management process when an incoming call history and a received mail history are notified at the time the mobile phone 1 receives an incoming call and a mail, will be explained based on the flowchart shown in Fig. 5. The main control unit 20 determines whether or not the mobile phone 1 receives an incoming call (receives a mail) (S101). When the mobile phone 1 does not receive the incoming call (receives the mail) (S101: No), the main control unit 20 waits as it is.

When the mobile phone 1 receives the incoming call (receives the mail) (S101: Yes), the main control unit 20 determines whether or not a transmission source of the incoming call (transmission source of the mail) is stored in the address book storage unit 26a as address book information (S103).

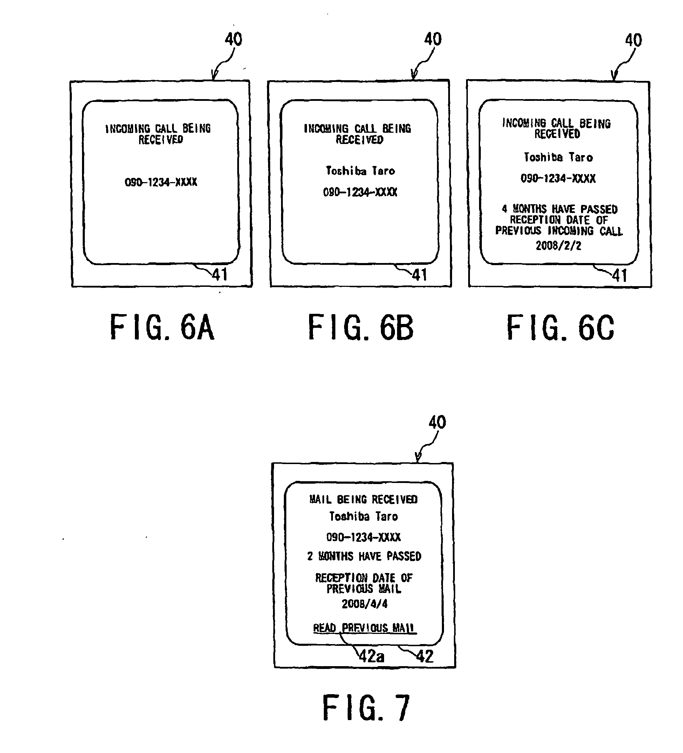

When the transmission source of the incoming call (transmission source of the mail) is not stored to the address book storage unit 26a (S103: No), since the mobile phone 1 does not have information as to the transmission sources of the incoming call and the mail, the main control unit 20 displays the phone number of the transmission source of the incoming call (mail address of the transmission source of the mail) as it is (S105). At the time, it is preferable to display a display column 41 on which a character train such as "090-1234-xxxx from which an incoming call is being received" on a display screen 40 of the display 13 as shown in, for example, a part A of Fig. 6.

Then, the main control unit 20 stores the phone number of the transmission source (mail address of the transmission source) and a received time of the incoming call (received time of the mail) to the storage unit 26 as an ordinary incoming call history (received mail history) (S109) and finishes the transmission/reception history management process. When a previously set upper limit number of histories are stored or when a predetermined period of time has passed, the ordinary incoming call history (received mail history) is deleted.

When the transmission source of the incoming call is stored to the address book storage unit 26a (S103: Yes), the main control unit 20 determines whether or not the transmission/reception history of the transmission source of the incoming call (transmission source of mail) is saved in the transmission/reception history information 30 (S111). At the time, when the save necessary/unnecessary information 34, which is caused to correspond to the transmission source of the incoming call (transmission source of the mail) is set to "to be saved" in the transmission/reception history information 30, the main control unit 20 determines that the transmission/reception history is saved to the transmission/reception history information 30.

When the transmission/reception history is not saved to the transmission/reception history information 30 (S111: No), since information as to the transmission source of the incoming call (transmission source of the mail) is stored to the address book storage unit 26a, the main control unit 20 obtains the information as to the transmission source of the incoming call (transmission source of the mail) from the address book storage unit 26a and displays the information (S113). At the time, when, for example, an incoming call is received from "Toshiba Taro" which is the contact address registered to the address book information, it is preferable to display the display column 41 on which a character train such as "incoming call being received Toshiba Taro 090-1234-xxxx" on the display screen 40 of the display 13 as shown in a part B of Fig. 6.

Then, the main control unit 20 stores the phone number of the transmission source (mail address of the transmission source) and an incoming call received time (mail received time) to the storage unit 26 as an ordinary incoming call history (received mail history) (S109) and finishes the transmission/reception history management process. The ordinary incoming call history (received mail history) is a history of the incoming calls (received mails) recently received from all the communication opponents and deleted when a previously set upper limit number of histories are stored or when a predetermined period of time has passed.

When the transmission source of the incoming call (transmission source of the mail) is saved to the transmission/reception history information 30 (S111: Yes), the main control unit 20 determines whether or not the incoming call is received (mail is received) from the transmission source of the incoming call (transmission source of the mail) at a second time and after (S115).

The incoming call is received (mail is received) from the transmission source of the incoming call (transmission source of the mail) for the first time (S115: No), since the transmission/reception information 32 is not yet stored to the transmission/reception history information 30, the main control unit 20 determines whether or not the incoming call (mail) received from the transmission source is included in the ordinary incoming call history (received mail history) (S116).

When the incoming call (mail) received from the transmission source is not included in the ordinary incoming call history (received mail history) (S116: No), since the transmission/reception history is stored neither to the ordinary incoming call history nor to the transmission/reception history information 30, the main control unit 20 obtains the information as to the transmission source of the incoming call (transmission source of the mail) from the address book storage unit 263 and displays the information likewise step S113 (S117). At the time, when, for example, an incoming call is received from "Toshiba Taro" which is the contact address registered to the address book information, it is preferable to display the display column 41 on which a character train such as "incoming mail being received Toshiba Taro 090-1234-xxxx" on the display screen 40 of the display 13 as shown in the part B of Fig. 6.

When the incoming call is received (mail is received) from the transmission source of the incoming source (transmission source of the mail) at a second time and after (S111: Yes), or when the incoming call (mail) received from the transmission source is included in the ordinary incoming call history (received mail history) (S116: Yes), the main control unit 20 obtains the transmission/reception information 32, which is caused to correspond to the contact address ID information 31 of the transmission source of the incoming call (transmission source of the mail) in the transmission/reception history information 30, or the ordinary incoming call history (received mail history), calculates the difference between the present date and time and the date and time at which a previous incoming call (mail) was received, and displays the period of time passed from the time at which the previous incoming call (mail) was received (S119). When, for example, the date and time of the previous incoming call is "2 o'clock, 2 minutes, 20 seconds of February, 2, 2008 and the present date and time is "15 o'clock, 0 minute, 0 second of June 5, 2008" in the transmission/reception information 32, a passed time is about 4 months. Accordingly, it is preferable to display the display column 41 on which a character train such as "incoming call being received Toshiba Taro 090-1234-xxxx four months have passed previous incoming mail date 2008/2/2" on the display screen 40 of the display 13 as shown in, for example, a part C of Fig. 6.

Further, when the mobile phone 1 receives a mail from "Toshiba Taro" at step S101, and, for example, the date and time at which a previous mail was received is "4 o'clock, 4 minutes, 40 seconds of April 4, 2008" in the transmission/reception information 32, and the present date and time is "15 o'clock, 0 minute, 0 second of June 5, 2008", a passed time is about two months. Accordingly, it is preferable to display the display column 42 on which a character train such as "mail being received Toshiba Taro 090-1234-xxxx 2 months have passed previous mail receiving date 2008/4/4" on the display screen 40 of the display 13 as shown in, for example, Fig. 7. Further, it is preferable that the main control unit 20 display a link 42a on the display column 42 to display the previously received mail and that, when the link 42a is selected by that the user operates an operation key 16, the main control unit 20 display information as to the mail received previously.

Then, the main control unit 20 determines whether or not the mobile phone 1 responds to the incoming mail received at step S101 (S121). At the time, the main control unit 20 determines that the mobile phone 1 responds to the incoming call based on, for example, the call key is depressed by the user. Further, when the mobile phone 1 receives the mail at step S101, it is assumed that the received mail is responded at step S121. When the mobile phone 1 responds to the incoming call (S121: Yes), the main control unit 20 updates the transmission/reception information 32 setting the received date and time of the incoming call (received date and time of the mail) as the received date and time of the previous incoming call (received date and time of the previous received mail), stores the transmission/reception information 32 to the transmission/reception history storage unit 26b as the transmission/reception history information 30 by causing it to correspond to the transmission source (S123), and finishes the transmission/reception history management process. When the mobile phone 1 responds to the incoming call (S121: No), the main control unit 20 stores the transmission source to the ordinary incoming call history (S109) and finishes the transmission/reception history management process.

As described above, when the transmission/reception history as to the transmission source of an incoming mail (transmission source of a mail) is stored at the time the mobile phone 1 receives the incoming call or the mail, it notifies the period of time passed from the time at which an incoming call or a mail was received previously. When the transmission source of the incoming mail (transmission source of the mail) is registered to the address book although the transmission/reception history as to the transmission source of the incoming mail (transmission source of the mail) is not stored, the mobile phone 1 notifies information as to the transmission source of the incoming call (transmission source of the mail), whereas when the transmission source of the incoming mail (transmission source of the mail) is not registered to the address book, the mobile phone 1 notifies the phone number of the transmission source of the incoming mail and the mail address of the transmission source of the mail.

Next, a procedure of the transmission/reception history management process executed when the mobile phone 1 notifies an outgoing call history and a transmitted mail history at the time it transmits an outgoing call and a mail will be explained based on a flowchart shown in Fig. 8. The main control unit 20 determines whether or not the mobile phone 1 is instructed to transmit an outgoing call (to transmit a mail) (S201). At the time, the main control unit 20 determines that the mobile phone 1 is instructed to transmit the outgoing call (to transmit the mail) by, for example, that the user depresses the call key. When it is not instructed to transmit the outgoing call (to transmit the mail) (S201: No), the main control unit 20 waits as it is.

When it is instructed to transmit the outgoing call (to transmit the mail) (S201: Yes), the main control unit 20 determines whether or not a transmission destination of outgoing call (transmission destination of mail) is stored to the address book storage unit 26a as the address book information (S203).

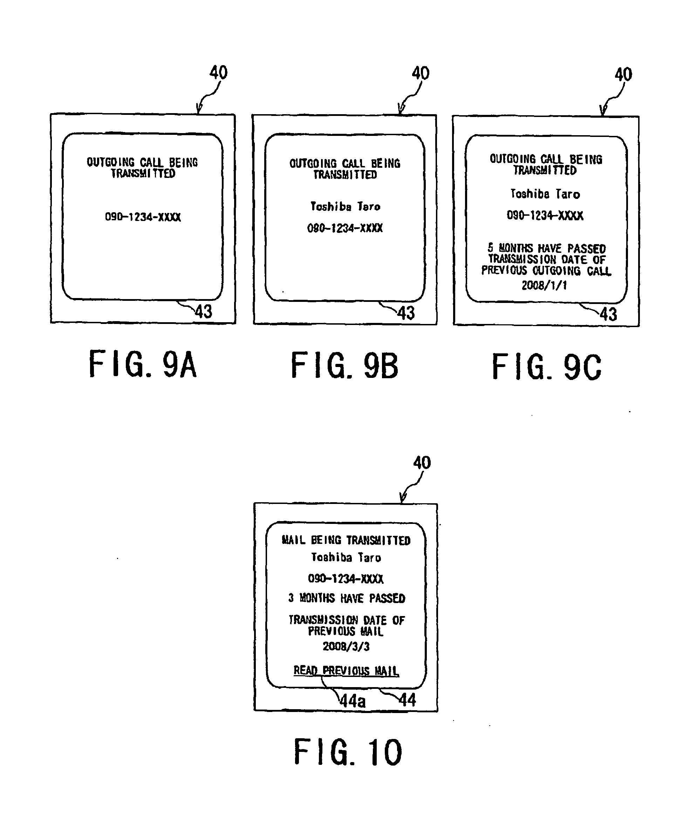

When the transmission destination of outgoing call (transmission destination of mail) is not stored to the address book storage unit 26a (S203: No), since the mobile phone 1 does not have information as to the transmission destinations of outgoing call and mail, the main control unit 20 displays the phone number of the transmission destination of outgoing call (mail address of the transmission destination of mail) as they are (S205). At the time, it is preferable to display a display column 43 on which a character train such as "outgoing call being transmitted 090-1234-xxxx" on the display screen 40 of the display 13 as shown in, for example, a part A of Fig. 9.

Then, the main control unit 20 stores the phone number of the transmission destination of outgoing call (mail address of the transmission destination) and the outgoing call transmission time (mail transmission time) to the storage unit 26 as an ordinary outgoing call history (transmitted mail history) (S209) and finishes the transmission/reception history management process. The ordinary outgoing call history (transmitted mail history) is a history of the outgoing calls (transmitted mails) recently transmitted to all the communication opponents and deleted when a previously set upper limit number of histories are stored or when a predetermined period of time has passed.

When the transmission destination of outgoing call (transmission destination of mail) is stored to the address book storage unit 26a (S203: Yes), the main control unit 20 determines whether or not the transmission/reception history of the transmission destination of outgoing call (transmission destination of mail) is stored to the transmission/reception history information 30 (S211). At the time, when the save necessary/unnecessary information 34, which is caused to correspond to the transmission destination of outgoing call (transmission destination of mail) is set to "to be saved" in the transmission/reception history information 30, the main control unit 20 determines that the transmission/reception history is saved to the transmission/reception history information 30.

When the transmission/reception history is not saved to the transmission/reception history information 30 (S211: No), since information as to the transmission destination of outgoing call (transmission destination of the mail) is stored to the address book storage unit 26a, the main control unit 20 obtains the information as to the transmission destination of outgoing call (transmission destination of the mail) from the address book storage unit 26a and displays the information (S213). At the time, when, for example, an incoming call is received from "Toshiba Taro" which is the contact address registered to the address book information, it is preferable to display the display column 43 on which a character train such as "outgoing call being transmitted Toshiba Taro 090-1234-xxxx" on the display screen 40 of the display 13 as shown in a part B of Fig. 9.

Then, the main control unit 20 stores the phone number of the transmission destination of the outgoing call (mail address of the transmission destination) and the outgoing call transmission time (mail transmission time) to the storage unit 26 as an ordinary outgoing call history (transmitted mail history) (S209) and finishes the transmission/reception history management process.

When the transmission destination of the outgoing call (transmission destination of the mail) is saved to the transmission/reception history information 30 (S211: Yes), the main control unit 20 determines whether or not an outgoing call is transmitted (mail is transmitted) to the transmission destination of the outgoing call (transmission destination of the mail) at a second time and after (S215).

When the outgoing call is transmitted (mail is transmitted) to the transmission destination of the outgoing call (transmission destination of the mail) for the first time (S215: No), since the transmission/reception information 32 is not yet stored to the transmission/reception history information 30, the main control unit 20 determines whether or not the transmission destination of the outgoing call (transmission destination of the mail) is included in the ordinary outgoing call history (transmitted mail history) likewise step S213 (S216). When the transmission destination of the outgoing call (transmission destination of the mail) is not included in the ordinary outgoing call history (transmitted mail history) (S216: No), the main control unit 20 obtains information as to the transmission destination of the outgoing call (transmission destination of the mail) from the address book storage unit 26a and displays the information (S217). At the time, when, for example, an outgoing call is transmitted (mail is transmitted) to "Toshiba Taro" which is the contact address registered to the address book information, it is preferable to display the display column 43 on which a character train such as "outgoing call being transmitted Toshiba Taro 090-1234-xxxx" on the display screen 40 of the display 13 as shown in the part B of Fig. 9.

When the outgoing call is transmitted (mail is transmitted) to the transmission destination of the outgoing call (transmission destination of the mail) at a second time and after (S211: Yes), or when the transmission destination of the outgoing call (transmission destination of the mail) is included in the ordinary incoming call history (transmitted mail history) (S216: Yes), the main control unit 20 obtains the transmission/reception information 32, which is caused to correspond to the contact address ID information 31 of the transmission destination of the outgoing call (transmission destination of the mail) in the transmission/reception history information 30, or the ordinary outgoing call history (mail transmission history), calculates the difference between the present date and time and the date and time at which a previous outgoing call (mail) was transmitted, and displays the period of time passed from the time at which the previous outgoing call (mail) was transmitted (S219). When, for example, the date and time of the previous outgoing call is "1 o'clock, 1 minute, 1 second of January 1, 2008 and the present date and time is "15 o'clock, 0 minute, 0 second of June 5, 2008" in the transmission/reception information 32, a passed time is about 5 months. Accordingly, it is preferable to display the display column 43 on which a character train such as "outgoing call being transmitted Toshiba Taro 090-1234-xxxx 5 months passed previous outgoing call date 2008/1/1" on the display screen 40 of the display 13 as shown in, for example, a part C of Fig. 9.

Further, when the mobile phone 1 transmits a mail to "Toshiba Taro" at step S201, and, for example, a previous mail reception date and time is "3 o'clock, 3 minutes, 30 seconds of March 3, 2008" in the transmission/reception information 32 and the present date and time is "15 o'clock, 0 minute, 0 second of June 5, 2008", a passed time is about three months. Accordingly, it is preferable to display the display column 44 on which a character train such as "mail being transmitted Toshiba Taro 090-1234-xxxx, 3 months have passed, previous mail receiving date 2008/3/3" on the display screen 40 of the display 13 as shown in, for example, Fig. 10. Further, it is preferable that the main control unit 20 display a link 44a on the display column 44 to display the previous transmitted mail and, when the link 44a is selected by operating an operation key 16 by the user, the main control unit 20 displays information as to the previous transmitted mail.

Then, the main control unit 20 determines whether or not an opponent responds to the outgoing mail transmitted by the mobile phone 1 at step S201 (S221). At the time, when the mobile phone 1 transmits a mail at step S201, it is assumed that the opponent responds to it at step S221. When the opponent responds to the outgoing call (S221: Yes), the main control unit 20 updates the transmission/reception information 32 setting the date and time of the outgoing call (date and time of the transmitted mail) to the previous date and time of outgoing call (date and time of the previous transmitted mail), stores the transmission/reception information 32 to the transmission/reception history storage unit 26b as the transmission/reception history information 30 by causing it to correspond to the transmission destination (S223), and finishes the transmission/reception history management process. When the opponent does not respond to the outgoing call (S221: No), the main control unit 20 stores the transmission destination to the ordinary incoming call history (S209) and finishes the transmission/reception history management process.

As described above, when the transmission/reception history as to the transmission destination of an outgoing mail (transmission destination of a mail) is stored at the time the mobile phone 1 transmits an outgoing call or a mail, it notifies the period of time passed from the time at which an outgoing call or a mail was transmitted previously. When the transmission destination of the outgoing mail (transmission destination of the mail) is registered to the address book although the transmission/reception history as to the transmission destination of the outgoing mail (transmission destination of the mail) is stored, the mobile phone 1 notifies information as to the transmission destination of outgoing mail (transmission destination of the mail), whereas when the transmission destination of the outgoing mail (transmission destination of the mail) is not registered to the address book, the mobile phone 1 notifies the phone number of the transmission destination of the outgoing mail and the mail address of the transmission destination of the mail.

Next, a procedure of the transmission/reception history management process for displaying the transmitted mail history when the user creates a mail using the mobile phone 1 will be explained based on a flowchart shown in Fig. 11. At the time, it is assumed that the mobile phone 1 executes a mail creation process, the main control 20 displays a mail creation column 45 of the display screen 40 of the display 13 as shown in a part A of Fig. 12, and the user inputs the contents of the mail based on the mail creation column 45 (S301). Information such as the mail address of a transmission destination, a subject, a text, an attached file, and the like which are input through operation keys 16 is displayed on the mail creation column 45.

The main control unit 20 determines whether or not the transmission destination of the mail is stored to the address book storage unit 26a as the address book information (S305). When the transmission destination of the mail is not stored to the address book storage unit 26a (S305: No), since the mobile phone 1 does not have information as to mail transmission to the transmission destination, the main control unit 20 displays an ordinary mail creation screen (S307).

When the transmission destination of the mail is stored to the address book storage unit 26a (S305: Yes), the main control unit 20 determines whether or not the transmission/reception history of the transmission destination of the mail is saved in the transmission/reception history information 30 (S309). At the time, when the save necessary/unnecessary information 34, which is caused to correspond to the transmission destination of the mail is set to "to be saved" in the transmission/reception history information 30, the main control unit 20 determines that the transmission/reception history is saved to the transmission/reception history information 30.

When the transmission/reception history is not saved to the transmission/reception history information 30 (S309: No), since the transmission destination of the mail is not registered to the transmission/reception history information 30 by the user, the main control unit 20 displays the ordinary mail creation screen (S307).

When the transmission destination of the mail is stored to the transmission/reception history information 30 (S309: Yes), the main control unit 20 determines whether or not the mail is transmitted to the transmission destination of the mail at a second time and after (S310). When the mail is transmitted to the transmission destination of the mail for the first time, (S310: No), since the transmission/reception information 32 is not yet stored to the transmission/reception history information 30, the main control unit 20 determines whether or not the history of a mail transmitted to the transmission destination of the above mail is included in the ordinary mail transmission history in consideration of the possibility that information as to the mail transmitted to the transmission destination is stored to the ordinary mail transmission history stored to the storage unit 26 (S311).

When the transmission history to the transmission destination is not stored to the ordinary mail transmission history (S311: No), since the mobile phone 1 does not have the information as to the mail transmitted to the transmission destination, the main control unit 20 displays the ordinary mail creation screen (S307). At the time, a character train such as "transmission/reception history of mail is not present" may be displayed to the mail creation column 45 displayed on the display screen 40 as shown in, for example, a part B of Fig. 12.

When the history of the mail transmitted to the transmission destination is included in the ordinary mail transmission history (S311: Yes), the main control unit 20 obtains the date and time of a previous mail transmitted to the transmission destination of the mail from the ordinary mail transmission history, calculates the difference between the present date and time and the date and time of the previous mail, and displays the period of time passed from the time at which the previous mail was transmitted (S313). When, for example, the date and time of the mail transmitted previously is "3 o'clock, 3 minutes, 30 seconds of March 3, 2008 and the present date and time is "15 o'clock, 0 minute, 0 second of June 5, 2008" in the ordinary mail transmission history, a passed time is about 3 months. Accordingly, it is preferable to display a character train such as "three months have passed" may be displayed to the mail creation column 45 displayed on the display screen 40 as shown in, for example, a part C of Fig. 12.

When the transmission of the mail to the transmission destination of the mail is at a second time and after (S310: Yes), the main control unit 20 obtains the transmission/reception information 32, which is caused to correspond to the contact address ID information 31 of the transmission destination of mail in the transmission/reception history information 30, calculates the difference between the present date and time and the date and time at which the mail was transmitted previously, and displays the period of time passed from the time at which the mail was transmitted previously (S313). When, for example, the date and time of the mail transmitted previously is "3 o'clock, 3 minutes, 30 seconds of March 3, 2008 and the present date and time is "15 o'clock, 0 minute, 0 second of June 5, 2008" in the ordinary mail transmission history, a passed time is about 3 months. Accordingly, it is preferable to display a character train of "three months have passed" and the like to the mail creation column 45 displayed on the display screen 40 as shown in, for example, the part of C of Fig. 12.

As described above, when the transmission/reception history as to the transmission destination is stored while the mobile phone 1 creates a mail, the mobile phone 1 notifies the period of time passed from the time at which a mail was transmitted previously. When the history of the mail transmitted previously to the transmission destination is stored to the ordinary transmitted mail history, although the transmission/reception history as to the transmission destination is not stored, the mobile phone 1 notifies the period of time passed from the time at which the mail was transmitted previously. Further, when the transmission/reception history as to the transmission destination is not stored and the history of the mail transmitted previously to the transmission destination is not also stored to the ordinary transmitted mail history, and when the transmission destination is not registered to the address book, the mobile phone 1 executes an ordinary notification.

Next, a procedure of the transmission/reception history management process for displaying the transmission/reception history when the user inputs a schedule using the mobile phone 1 will be explained based on a flowchart shown in Fig. 13. At the time, it is assumed that the mobile phone 1 executes a schedule input process, the main control 20 displays a schedule input column 46 of the display screen 40 of the display 13 as shown in a part A of Fig. 14, and the user inputs the contents of a schedule based on the schedule input column 46 (S401). The schedule input column 46 displays information such as a date and time, a subject, a date and time to be started, a date and time to be ended, an opponent, contents, and the like of the schedule input through operations key 16.

When the user desires to input a schedule of a meal with a predetermined person at the time the user inputs the schedule to the mobile phone 1, the user inputs the information of "an opponent" by directly inputting the name and the like of the person through operation keys 16 or selecting a contact address (person) from the address book information through operation keys 16. The main control unit 20 determines whether or not a contact address (person) registered to the address book information is selected while the information of "the opponent" is being input (S403). When a contact address registered to the address book is not selected (S403: No), the main control unit 20 displays the input name by an ordinary manner (S905). At the time, "Mr. Sato" as the name of the opponent is displayed to the schedule input column 46 as shown in, for example, the part A of Fig. 1.

When the contact address registered to the address book information is selected (S403: Yes), the main control unit 20 determines whether or not the transmission/reception history of the selected contact address is saved in the transmission/reception history information 30 (S407). At the time, when the save necessary/unnecessary information 34, which is caused to correspond to the selected contact address is set to "to be saved" in the transmission/reception history information 30, the main control unit 20 determines that the transmission/reception history is saved to the transmission/reception history information 30.

When the transmission/reception history is not saved to the transmission/reception history information 30 (S407; No), the main control unit 20 displays the name and the like of the select contact address by an ordinary manner (S405). At the time, "Mr. Sato" as the name of the opponent is displayed to the schedule input column 46 as shown in, for example, the part A of Fig. 14.

When the transmission/reception history is stored to the transmission/reception history information 30 (S407; Yes), the main control unit 20 determines whether or not an incoming call and an outgoing call to and from the contact address and transmission and reception of a mail to and from contact address are executed at a second time and after (S908). When the incoming call and the outgoing call to and from the contact address and transmission and reception of the mail to and from contact address are executed for the first time (S408: No), the transmission/reception information 32 is not yet stored to the transmission/reception history information 30. Thus, the main control unit 20 determines whether or not a communication to the contact address is included in an ordinary outgoing call history, an ordinary incoming call history, an ordinary transmitted mail history, or an ordinary received mail history in consideration of the possibility that information as to a communication to the contact address is stored to the ordinary outgoing call history, the ordinary incoming call history, the ordinary transmitted mail history, or the ordinary received mail history stored to the storage unit 26 (S409).

When the communication to the contact address is not included in the ordinary outgoing call history, the ordinary incoming call history, the ordinary received mail history, or the ordinary transmitted mail history (S409: No), the main control unit 20 displays the name and the like of the selected contact address by an ordinary manner (5905). At the time, for example, a character train such as "transmission/reception history is not present" may be displayed on the schedule input column 46 displayed on the display screen 40.

When the transmission/reception history is saved to the transmission/reception history information 30 (S407: Yes), or when a communication to the contact address is included in the ordinary outgoing call history, the ordinary incoming call history, the ordinary transmitted mail history, or the ordinary received mail history (S409: Yes), the main control unit 20 obtains the transmission/reception information 32, which is caused to correspond to the contact address ID information 31 of the contact address selected in the transmission/reception history information 30 or the ordinary outgoing call history, the ordinary incoming call history, the ordinary received mail history, or the ordinary transmitted mail history, calculates the difference between the date and time scheduled in the schedule and the date and time when the user made a contact last time (date and time at which an outgoing call was transmitted or an incoming call was received last time and a date and time at which a mail was transmitted or received last time), and displays a period of time passed from the date and time at which the user made the contact last time (S409). When, for example, the date and time of transmission of a previous mail is "4 o'clock, 4 minutes, 40 seconds of April 4, 2008 and the present date and time is "12 o'clock, 0 minute, 0 second of June 6, 2008" in the transmission/reception information 32 of the transmission/reception history information 30, a passed time is about 2 months. Accordingly, it is preferable to display a character train such as "2 months have passed" may be displayed to the mail creation column 65 displayed on the display screen 40 as shown in, for example, the part C of Fig. 12.

A reference date used to calculate the passed date and time at the time is not limited to the scheduled date and time in the schedule and may be a date and time at which an input was made (present date and time). Otherwise, when an input contact address is a contact address which was registered to the schedule in the past, a period of time passed from the date and time to be started and the date and time to be ended which were registered last time may be calculated.

Note that when the name of the person and the like are directly input by the user through operation keys 16 at step S403 and the input name and the like are stored to the transmission/reception history information 30 as the contact address ID information 31, the main control unit 20 may go to Yes at step S403.

As described above, when the transmission/reception history as to the contact address is stored at the time the contact address registered to the address book is input while the schedule is input, the mobile phone 1 notifies the period of time passed from the time a contact was made last time (outgoing and incoming calls and transmission and reception of mails) last time. Note that when the contact address, which is input while the schedule is input, is registered to the schedule as, for example, "conference", "meal", and the like, it is preferable to notify a period of time passed from the scheduled date.

According to the communication equipment of the present invention, when an outgoing call is transmitted to and an incoming call is received from and a mail is transmitted to and a mail is received from a contact address registered to the address book, the dates and times of the incoming call and the outgoing call and the dates and times of the transmitted mail and the received mail are stored at all the times. Then, when an outgoing call is transmitted to and an incoming call is received from and a mail is transmitted to and a mail is received from the contact address next, periods of time passed from the times at which a previous outgoing call was transmitted to and a previous incoming call was received from and a previous mail was transmitted to and a previous mail was received from the contact address are displayed. With this operation, the user can simply grasp how long period of time has passed since a communication was made to the contact address last time.

Note that although the transmission/reception information 32 is stored to the transmission/reception history information 30 after it is caused to correspond to the contact address ID, it may be stored to the transmission/reception history 32 after it is caused to correspond to a group ID composed of a plurality of the contact addresses. Further, when the save necessary/unnecessary information 34 of the transmission/reception history information 30 is set, it is preferable for the user to select an arbitrary contact address from the contact addresses included in the address book information and to set the save necessary/unnecessary information 34, which is caused to correspond to the selected contact address, to "to be saved" in the transmission/reception history information 30.

Although the embodiment explains the case that the periods of time, which have been passed from the times at which a previous outgoing call was transmitted, a previous incoming call was received, a previous mail was transmitted, and a previous mail was received, are displayed on the display screen 40 of the display 13, the passed periods of time may be notified to the user by generating a voice from the speaker 14. A ringtone may be changed depending on the passed periods of time when an incoming call is received and a mail is received.

Otherwise, the periods of time passed from the times at which a previous outgoing call was transmitted, a previous incoming call was received, a previous mail was transmitted, and a previous mail was received may be notified to the user by turning on the LED 15 at the times of transmission and reception thereof. At the time, the color of the turned-on light may be changed according to the passed periods of time or intervals of lighting may be changed according thereto.

Otherwise, the periods of time passed from the times at which a previous outgoing call was transmitted, a previous incoming call was received, a previous mail was transmitted, and a previous mail was received may be notified to the user by characters showing the transmission and arrival thereof at the times of transmission and reception thereof. At the time, the character showing arrival and transmission may be changed according to passed periods of time or the clothe of the character may be changed according to the passed periods of time.

Further, when the transmission/reception history of outgoing and incoming calls and the transmission/reception history of mails are displayed, they may be notified to the user by changing an icon according to the periods of time passed from the times at which a previous outgoing call was transmitted, a previous incoming call was received, a previous mail was transmitted, and a previous mail was received. When the user observes the transmission/reception history of outgoing and incoming calls and the transmission/reception history of mails, the user can make a contact with an opponent to which the user does not make a contact for some time by confirming the icon.

Whether it is permitted or not to display the periods of time passed from the times at which a previous outgoing call was transmitted, a previous incoming call was received, a previous mail was transmitted, and a previous mail was received may be selected by the user. At the time, the permission of display may be set the passed period of time of each of the outgoing call, the incoming call, the transmitted mail, and the received mail or may be collectively set to the passed periods of time of all of them.

The embodiment explains the example that the periods of time passed from the times at which a previous outgoing call was transmitted, a previous incoming call was received, a previous mail was transmitted, and a previous mail was received are shown by a unit of months such as "X months have passed". However, the embodiment is not limited thereto, and they may be shown in detail up to a unit of date, a unit of time, a unit of minute, a unit of second, and the like.

Further, the embodiment explains the example that when, for example, an incoming call is received, the period of time from the time at which a previous incoming call was received is notified, and when a mail is transmitted, the period of time from the time at which a previous mail was transmitted is notified. However, the embodiment is not limited thereto, and when an incoming call is received, the period of time passed from the time at which a previous outgoing call was transmitted, a previous mail was received, and a previous mail was transmitted may be notified, and vice versa. This is the same when an outgoing call is transmitted, a mail is received, and a mail is transmitted. Otherwise, all the periods of time after a previous incoming call was received, a previous outgoing call was transmitted, and a previous mail was transmitted, and a previous mail was received may be notified, and the shortest passed period of time of those of the outgoing and incoming calls and the transmitted and received mails (contact address to which a contact was made latest) may be notified.

Although the mobile phone 1 has been explained as the explanation of the present invention, the present invention is not limited thereto, and the mobile phone 1 may be any arbitrary communication equipment having a voice communication function or a mail transmission/reception function such as a PHS (Personal Handy phone System), a PDA (Personal Digital Assistants), a mobile music player, a mobile video camera, a mobile game machine, and the like.

## Claims

1. A communication equipment (1) including
a first storage unit (26a) adapted to store phone numbers or mail addresses in correspondence with respective communication opponents,
**characterized by**:
a selection unit adapted to select a communication opponent from the communication opponents in a case where a phone number or a mail address of the communication opponent is stored by the first storage unit for setting save necessary/unnecessary information in correspondence with the communication opponent to indicate that an outgoing/incoming call history or a mail transmission/reception history with respect to the selected communication opponent is stored,
a second storage unit (26b) adapted to store the outgoing/incoming call history or the mail transmission/reception history in correspondence with the communication opponent selected by the selection unit, and
a notification unit adapted to calculate and notify the period of the time passed from at least the time at which a previous outgoing call was transmitted to the communication opponent and a previous incoming call was received from the communication opponent or a previous mail was transmitted to the communication opponent and a previous mail was received from the communication opponent based on the outgoing/incoming call history and the mail transmission/reception history stored by the second storage unit (26b) in a case where the outgoing/incoming call history or the mail transmission/reception history corresponding to the communication opponent is stored by the second storage unit (26b) at the time an outgoing call is transmitted to the communication opponent and an incoming call is received from the communication opponent or a mail is transmitted to the communication opponent and a mail is received from the communication opponent, and
adapted to notify only the phone number or the mail address of the communication opponent stored by the first storage unit (26a) when the communication opponent is not selected by the selection unit, without calculating the period of time.

2. The communication equipment according to claim 1,
wherein the notification unit is adapted to display an outgoing/incoming call history or a mail transmission/reception history, and is further adapted to display icons based on the periods.

3. The communication equipment according to claim 1,
wherein the notification unit is adapted to notify, when the communication equipment receives an incoming call, information related to the previous outgoing call.

4. The communication equipment according to claim 1,
wherein the notification unit is adapted to calculate and notify (S119), when the communication equipment receives an incoming call or receives a mail, the periods of time passed from the times at which a previous incoming call was received or a previous mail was received.

5. The communication equipment according to claim 1,
wherein the notification unit is adapted to calculate and notify (S219), when the communication equipment receives an incoming call or receives a mail, the periods of time passed from the times at which a previous outgoing call was transmitted or a previous mail was transmitted.

6. The communication equipment according to claim 1,
wherein the notification unit is adapted to calculate and notify, when the communication equipment transmits an outgoing call or transmits a mail, the periods of time passed from the times at which a previous incoming call was received or a previous mail was received.

7. The communication equipment according to claim 1,
wherein the notification unit is adapted to calculate and notify, when the communication equipment transmits an outgoing call or transmits a mail, the periods of time passed from the times at which a previous outgoing call was transmitted or a previous mail was transmitted.

8. The communication equipment according to claim 1,
wherein the notification unit is adapted to calculate and notify, when the communication equipment transmits an outgoing call and receives an incoming call or transmits a mail and receives a mail, the shortest period of time passed from the time at which a previous outgoing call was transmitted or a previous incoming call was received or a previous mail was transmitted or a previous mail was received.

## Patentansprüche

1. Kommunikationsausrüstung (1) umfassend
eine erste Speichereinheit (26a), die angepasst ist, Telefonnummern oder Mail-Adressen in Entsprechung mit jeweiligen Kommunikations-Gegenübern zu speichern,
**gekennzeichnet durch**:
eine Auswahleinheit, die angepasst ist, ein Kommunikations-Gegenüber aus den Kommunikations-Gegenübern zu wählen, in einem Fall, in dem eine Telefonnummer oder eine Mail-Adresse des Kommunikations-Gegenübers von der ersten Speichereinheit gespeichert ist, um Speichern-Erforderlich-/Nicht-Erforderlich-Information in Entsprechung mit dem Kommunikations-Gegenüber einzustellen, um anzuzeigen, dass eine Abgehender-/Ankommender-Anruf-Historie oder eine Mail-Übertragungs-/Empfangs-Historie hinsichtlich des gewählten Kommunikations-Gegenübers gespeichert wird,
eine zweite Speichereinheit (26b), die angepasst ist, die Abgehender-/Ankommender-Anruf-Historie oder die Mail-Übertragungs-/Empfangs-Historie in Entsprechung mit dem Kommunikations-Gegenüber zu speichern, der von der Auswahleinheit ausgewählt ist, und
eine Meldeeinheit, die angepasst ist, die Zeitperiode zu berechnen und zu melden, die ab wenigstens der Zeit verstrichen ist, zu der ein vorheriger abgehender Anruf an das Kommunikations-Gegenüber übertragen wurde und ein vorheriger ankommender Anruf von dem Kommunikations-Gegenüber empfangen wurde, oder eine vorherige Mail an das Kommunikations-Gegenüber übertragen wurde und eine vorherige Mail von dem Kommunikations-Gegenüber empfangen wurde, basierend auf der Abgehender-/Ankommender-Anruf-Historie und der Mail-Übertragungs-/Empfangs-Historie, die von der zweiten Speichereinheit (26b) gespeichert wird, in einem Fall, in dem die Abgehender-/Ankommender-Anruf-Historie oder die Mail-Übertragungs-/Empfangs-Historie, die dem Kommunikations-Gegenüber entspricht, von der zweiten Speichereinheit (26b) gespeichert wird, zu der Zeit, zu der ein abgehender Anruf an das Kommunikations-Gegenüber übertragen wird und ein ankommender Anruf von dem Kommunikations-Gegenüber empfangen wird oder eine Mail an das Kommunikations-Gegenüber übertragen wird und eine Mail von dem Kommunikations-Gegenüber empfangen wird, und
die angepasst ist, nur die Telefonnummer oder Mail-Adresse des Kommunikations-Gegenübers zu melden, die von der ersten Speichereinheit (26a) gespeichert ist, wenn das Kommunikations-Gegenüber nicht von der Auswahleinheit gewählt ist, ohne die Zeitperiode zu berechnen.

2. Kommunikationsausrüstung nach Anspruch 1,
wobei die Meldeeinheit angepasst ist, eine Abgehender-/Ankommender-Anruf-Historie oder eine Mail-Übertragungs-/Empfangs-Historie anzuzeigen und ferner angepasst ist, Bildzeichen basierend auf den Perioden anzuzeigen.

3. Kommunikationsausrüstung nach Anspruch 1,
wobei die Meldeeinheit angepasst ist, Information zu melden, die sich auf den vorherigen abgehenden Anruf bezieht, wenn die Kommunikationsausrüstung einen ankommenden Anruf empfängt.

4. Kommunikationsausrüstung nach Anspruch 1,
wobei die Meldeeinheit angepasst ist, die Zeitperioden zu berechnen und zu melden (S219), die ab den Zeiten verstrichen sind, zu denen ein vorheriger ankommender Anruf empfangen wurde oder eine vorherige Mail empfangen wurde, wenn die Kommunikationsausrüstung einen ankommenden Anruf empfängt oder eine Mail empfängt.

5. Kommunikationsausrüstung nach Anspruch 1,
wobei die Meldeeinheit angepasst ist, die Zeitperioden zu berechnen und melden (S219), die ab den Zeiten verstrichen sind, zu welchen ein vorheriger abgehender Anruf übertragen wurde oder eine vorherige Mail übertragen wurde, wenn die Kommunikationsausrüstung einen ankommenden Anruf empfängt oder eine Mail empfängt.

6. Kommunikationsausrüstung nach Anspruch 1,
wobei die Meldeeinheit angepasst ist, die Zeitperioden zu berechnen und zu melden, die ab den Zeiten verstrichen sind, zu welchen ein vorheriger ankommender Anruf empfangen wurde oder eine vorherige Mail empfangen wurde, wenn die Kommunikationsausrüstung einen abgehenden Anruf überträgt oder eine Mail überträgt.

7. Kommunikationsausrüstung nach Anspruch 1,
wobei die Meldeeinheit angepasst ist, die Zeitperioden zu berechnen und melden, die ab den Zeiten verstrichen sind, zu welchen ein vorheriger abgehender Anruf übertragen wurde oder eine vorherige Mail übertragen wurde, wenn die Kommunikationsausrüstung einen abgehenden Anruf überträgt oder eine Mail überträgt.

8. Kommunikationsausrüstung nach Anspruch 1,
wobei die Meldeeinheit angepasst ist, die kürzeste Zeitperiode zu berechnen und zu melden, die ab der Zeit verstrichen ist, zu der ein vorheriger abgehender Anruf übertragen wurde oder ein vorheriger ankommender Anruf empfangen wurde oder eine vorherige Mail übertragen wurde oder eine vorherige Mail empfangen wurde, wenn die Kommunikationsausrüstung einen abgehenden Anruf überträgt und einen ankommenden Anruf empfängt oder eine Mail überträgt und eine Mail empfängt.

## Revendications

1. Equipement de communication (1) comportant
une première unité de stockage (26a) conçue pour stocker des numéros de téléphone ou des adresses de messagerie électronique en correspondance avec des interlocuteurs de communication respectifs,
**caractérisé par** :
une unité de sélection conçue pour sélectionner un interlocuteur de communication parmi les interlocuteurs de communication dans un cas dans lequel un numéro de téléphone ou une adresse de messagerie électronique de l'interlocuteur de communication est stocké par la première unité de stockage, pour le paramétrage d'informations de sauvegarde nécessaire/non nécessaire en correspondance avec l'interlocuteur de communication pour indiquer qu'un historique d'appels sortants / entrants ou un historique de transmission/réception de messages électroniques concernant l'interlocuteur de communication sélectionné est stocké,
une deuxième unité de stockage (26b) conçue pour stocker l'historique d'appels sortants / entrants ou l'historique de transmission / réception de messages électroniques en correspondance avec l'interlocuteur de communication sélectionné par l'unité de sélection, et
une unité de notification conçue pour calculer et notifier le laps de temps écoulé depuis au moins le moment où un appel sortant précédent a été transmis à l'interlocuteur de communication et un appel entrant précédent a été reçu de l'interlocuteur de communication ou un message électronique précédent a été transmis à l'interlocuteur de communication et un message électronique précédent a été reçu de l'interlocuteur de communication, sur la base de l'historique d'appels sortants / entrants et de l'historique de transmission/réception de messages électroniques stocké par la deuxième unité de stockage (26b), dans un cas dans lequel l'historique d'appels sortants / entrants ou l'historique de transmission / réception de messages électroniques correspondant à l'interlocuteur de communication est stocké par la deuxième unité de stockage (26b), au moment où un appel sortant est transmis à l'interlocuteur de communication et un appel entrant est reçu de l'interlocuteur de communication ou un message électronique est transmis à l'interlocuteur de communication et un message électronique est reçu de l'interlocuteur de communication, et
conçue pour notifier uniquement le numéro de téléphone ou l'adresse de messagerie électronique de l'interlocuteur de communication stocké par la première unité de stockage (26a) lorsque l'interlocuteur de communication n'est pas sélectionné par l'unité de sélection, sans calculer le laps de temps.

2. Equipement de communication selon la revendication 1,
dans lequel l'unité de notification est conçue pour afficher un historique d'appels sortants / entrants ou un historique de transmission / réception de messages électroniques, et est en outre conçue pour afficher des icônes en fonction des laps de temps.

3. Equipement de communication selon la revendication 1,
dans lequel l'unité de notification est conçue pour notifier, lorsque l'équipement de communication reçoit un appel entrant, des informations concernant l'appel sortant précédant.

4. Equipement de communication selon la revendication 1,
dans lequel l'unité de notification est conçue pour calculer et notifier (S119), lorsque l'équipement de communication reçoit un appel entrant ou reçoit un message électronique, les laps de temps écoulés depuis les moments où un appel entrant précédant a été reçu ou un message électronique précédant a été reçu.

5. Equipement de communication selon la revendication 1,
dans lequel l'unité de notification est conçue pour calculer et notifier (S219), lorsque l'équipement de communication reçoit un appel entrant ou reçoit un message électronique, les laps de temps écoulés depuis les moments où un appel sortant précédant a été transmis ou un message électronique précédant a été transmis.

6. Equipement de communication selon la revendication 1,
dans lequel l'unité de notification est conçue pour calculer et notifier, lorsque l'équipement de communication transmet un appel sortant ou transmet un message électronique, les laps de temps écoulés depuis les moments où un appel entrant précédant a été reçu ou un message électronique précédant a été reçu.

7. Equipement de communication selon la revendication 1,
dans lequel l'unité de notification est conçue pour calculer et notifier, lorsque l'équipement de communication transmet un appel sortant ou transmet un message électronique, les laps de temps écoulés depuis les moments où un appel sortant précédant a été transmis ou un message électronique précédant a été transmis.

8. Equipement de communication selon la revendication 1,
dans lequel l'unité de notification est conçue pour calculer et notifier, lorsque l'équipement de communication transmet un appel sortant et reçoit un appel entrant ou transmet un message électronique et reçoit un message électronique, le laps de temps le plus court écoulés depuis le moment où un appel sortant précédant a été transmis ou un appel entrant précédant a été reçu ou un message électronique précédant a été transmis ou un message électronique précédent a été reçu.
